# EUROPEAN PATENT APPLICATION

(11) **EP 2 136 526 A1**
(43) Date of publication of application: **23.12.2009**
(21) Application number: 08715357.3
(22) Date of filing: 28.03.2008
(51) Int. Cl.: H04L 29/06

(54) **METHOD, DEVICE FOR IDENTIFYING SERVICE FLOWS AND METHOD, SYSTEM FOR PROTECTING AGAINST A DENIAL OF SERVICE ATTACK**

(30) Priority: 28.04.2007 CN 200710098879; 20.08.2007 CN 200710138784
(71) Applicant: Huawei Technologies Co., Ltd., Longgang District, Shenzhen Guangdong 518129 (CN)
(72) Inventor: LIU, Lifeng, Shenzhen Guangdong 518129 (CN); ZHENG, Zhibin, Shenzhen Guangdong 518129 (CN)
(74) Representative: Thun, Clemens
(86) International application number: PCT/CN2008/070621
(87) International publication number: WO 2008/131667

(57) **Abstract**

A method, device for identifying service flows and a method, system for protecting against a denial of service attack are provided. The method for identifying service flows includes: detecting a user access to a target system; dynamically generating a set of user identifier information according to the detected user access to the target system and a preset user access statistical model; when the service flow needs to be identified, extracting the user identifier information from the service flow; comparing the extracted user identifier information with the user identifier information in the set of user identifier information to determine whether they are matched; determining whether the service flow is legal service flow according to the comparison result.

## Description

### Cross-Reference to Related Applications

The present application claims the priority of Chinese patent application No. 200710098879.8, entitled as "Traffic Stream Identifying Method, Device, and Distributed Deny of Service Attack Defense Method and System" and filed with the Chinese Patent Office on April 28, 2007, and the priority of Chinese patent application No. 200710138784.4, entitled as "Traffic Stream Identifying Method, Device, and Distributed Deny of Service Attack Defense Method and System" and filed with the Chinese Patent Office on Aug, 20, 2007, the contents of which are incorporated herein by reference in their entireties.

### Field of the Invention

The present invention relates to network communication field, in particular to a traffic stream identifying method, a traffic stream identifying device, a Deny of Service attack defense method, a Deny of Service attack defense system, and a device.

### Background of the Invention

Distributed Deny of Service (DDoS) attacks are mainly implemented in two ways: 1. attack network devices and servers with heavy traffic; 2. deplete server resources by producing a great number of incomplete requests that may not be fulfilled.

At present, a black hole technique is mainly used for DDoS defense: in case of DDoS attack, the operator tries to intercept the data packets targeted to the attacked party at the upstream, and then leads the intercepted data packets into a "black hole" and discards the intercepted data packets, so as to protect and save the operator's fundamental network and the services for other customers.

However, the inventor finds that the black hole technique in the prior art at least has the following drawbacks: because the operator discards the data packets targeted to the attacked party, valid data packets targeted to the attacked party may be discarded together with the malicious attack data packets. Though the method may protect and save the operator's fundamental network and the services for other customers, the attacked party may lose all service traffic; therefore, objectively, the attacker attains the purpose of attack.

### Summary of the Invention

An embodiment of the invention provides a traffic stream identifying method and device, which improves the accuracy in identification of valid traffic streams; an embodiment of the invention further provides a Deny of Service attack defense application, which improves defense capability of the Distributed Deny of Service attack defense system; an embodiment of the invention further provides a device for generating user information, which provides user information required for identifying traffic stream and performing defense.

An embodiment of the invention provides a traffic stream identifying method, which includes: detecting a user access to the target system; generating a user identification information set dynamically in accordance with the detected user access to the target system and a preset user access statistic model; extracting the user identification information from a traffic stream, when the traffic stream needs to be identified; comparing the extracted user identification information with the user identification information in the user identification information set to determine whether they match; determining, in accordance with a result of comparison, whether the traffic stream is valid.

An embodiment of the invention further provides a Deny of Service attack defense method, which includes: detecting a user access to the target system; generating user identification information set in accordance with the detected user access to the target system and a preset user access statistic model; extracting the user identification information from a traffic stream when the traffic stream needs to be identified; comparing the extracted UID information with the user identification set information to determine whether they match; determining, in accordance with the result of comparison, whether the traffic stream is valid; permitting subsequent normal processing operations for the determined traffic stream, or forbidding any subsequent normal processing operation for the determined traffic stream.

An embodiment of the invention further provides a traffic stream identifying device, which includes: a first module, configured to detect a user access to the target system, generate user identification information dynamically in accordance with the detected user access to the target system and a preset user access statistic model, and output the user identification information; a second module, configured to receive the user identification information output from the first module and store the user identification information into user identification set information; a third module, configured to extract the user identification information from a traffic stream, compare the extracted user identification information with the user identification information in the user identification information set to determine whether they match, and determine, in accordance with the result of comparison, whether the traffic stream is valid, and output a determination result.

An embodiment of the invention further provides a Deny of Service attack defense system, which includes: a first module, configured to detect a user access to the target system, generate user identification information dynamically in accordance with the detected user access to the target system and a preset user access statistic model, and output the user identification information; a second module, configured to receive the user identification information output from the first module and store the user identification information into a user identification information set; a third module, configured to extract the user identification information from the traffic stream, compare the extracted user identification information with the user identification information in the user identification information set to determine whether they match, determine, in accordance with the result of comparison, whether the traffic stream is valid, and output the determination result; and a fourth module, configured to receive the determination result that indicates whether the traffic stream output from the third module is valid, and permit subsequent normal processing operations for the determined valid traffic stream, or forbid any subsequent normal processing operation for the determined invalid traffic stream.

An embodiment of the invention further provides a user information generating device, which includes: a first module, configured to detect a user access to a target system, generate user identification information dynamically in accordance with the detected user access to the target system and a preset user access statistic model, and output the user identification information; a second module, configured to receive the user identification information output from the first module, and store the user identification information into a user identification information set.

### Brief Description of the Drawings

Figure 1 is a schematic flow diagram of the traffic stream identifying method according to an embodiment of the invention;

Figure 2 is a schematic flow diagram of the DDoS attack defense method according to an embodiment of the invention; and

Figure 3 is a schematic diagram of the DDoS attack defense system according to an embodiment of the invention.

### Detailed Description of the Embodiments

Through investigations, the inventor finds: in DDoS attacks, though attack traffic streams have little difference to normal traffic streams from the perspective of the characteristics and behaviors of the messages, attack traffic streams are different from normal traffic streams in terms of user access to the target system. The difference lies in: because DDoS attacks are initiated by a large number of dummy hosts, attack traffic streams are transmitted from a large number of dummy hosts; whereas normal traffic streams are transmitted from valid users. Generally, the access to target system from valid users is expectable, while access to the target system from dummy hosts is unexpectable.

The inventor utilizes the above-mentioned characteristic that the access to the target system from valid users is expectable, to implement traffic stream identification and DDoS attack defense. That is, because the access to the target system from valid users usually conforms to a certain user access statistic model, embodiments of the invention utilize the user access statistic model to predict valid user or invalid users. An example of predicting valid users or invalid users is: predicting the probability of access to the service system in DDoS attack state in accordance with the historical information of the user access to the target system, and determining whether the users are valid users or invalid users in accordance with the predicted probability; if the user identification information of valid users is to be logged, obtaining the corresponding user identification information from the traffic stream of the user access to the target system upon determining the user as a valid user, and log the user identification information in a user identification information set; here, the logged user identification information set may be used as a white list of users; if the user identification information of invalid users is to be logged, obtaining the corresponding user identification information from the traffic stream of the user access to the target system upon determining the user as an invalid user, and log the user identification information in a user identification information set; here, the logged user identification information set may be used as a black list of users.

For example, users who are predicted with high probability may be determined as valid users, and the corresponding user identification information may be obtained from the traffic stream of the user access to the target system and then be logged. Subsequently, valid traffic streams and invalid traffic streams may be identified with the logged user identification information. Because valid/invalid users may be identified accurately as far as possible in accordance with the user identification information generated from the user access statistic model, valid traffic streams and invalid traffic streams may be identified accurately as far as possible with the logged user identification information. The above-mentioned procedures for identifying valid traffic streams and invalid traffic streams may be applied in DDoS attack defense. That is, during the DDoS attack defense process, subsequent normal processing operations for an identified valid traffic stream may be permitted, while any subsequent normal processing operation for an identified invalid traffic stream may be forbidden. In other words, in the DDoS attack defense process, the traffic stream may be identified in accordance with the corresponding user identification information of users who are expected to access the target system, and subsequent processing operations may be performed for identified valid/invalid traffic streams appropriately. In that way, the embodiments of the invention may effectively intercept attacks of invalid traffic streams while ensure normal access to the target system from valid users.

In the embodiments of the invention, the user identification information logged in the user identification information set may be existing user identification information that is born in the current traffic stream; or, the user identification information may be new user identification information that is added to implement the method for traffic stream identification and DDoS attack defense; or, the user identification information may be existing user identification information and new user identification information. If the user identification information includes new user identification information, the new user identification information may be carried in a new field in messages, for example, it may be carried in a new field in Application Layer Protocol messages or a new field in secure protocol messages; for example, the new user identification information may be carried in the messages in the user login stage or the messages before the user login stage.

The new user identification information may be generated at the user side, for example, it may be generated by a client of the service system when the user starts the client for the first time and initializes the client to access the service system. Alternatively, the new user identification information may be generated at the network side, for example, when a user starts the client of the service system and accesses the service system for the first time, the service system may assign user identification information to the user, and then returns the message carried the assigned user identification information to the client. After that, when the user accesses the service system, the new user identification information may be carried in the messages or not carried in the messages.

If the new user identification information is generated at the user side, it may be carried in the first application layer message that is sent when the user accesses the service system; if the new user identification information is generated at the network side, it may be carried in the first message that is sent from the service system to the user.

In the embodiments of the invention, new user identification information may be generated randomly. In other words, new user identification information may be random values.

In the embodiments of the invention, a user may correspond to a plurality of user identifications.

The traffic stream identifying method provided in the embodiments of the invention is firstly described as follows.

In an embodiment of the traffic stream identifying method, a user identification information set is arranged. The way of arranging user identification information set as follows: predicting valid/invalid users in accordance with a historical information of the user access to the target system and a preset certain user access statistic model, for example, predicting users who are possible to access the target system and/or the users who are impossible to access the target system in DDoS attack state; then obtaining the corresponding user identification information from the traffic stream of users access to the target system who are possible to access the target system and/or are impossible to access the target system. The user identification information may be IP address or other information that may be used in network messages to identify the user, such as the Cookie field in HTTP messages; or, the user identification information may be the above-mentioned new user identification information. The embodiments of the invention don not exclude configuring user identification information statically.

The user identification information set arranged in the embodiments of the invention may be a user identification information set of valid users; in that case, the arranged user identification information set may be referred to as a white list of users. Alternatively, the arranged user identification information may be a user identification information set of invalid users; in that case, the arranged user identification information set may be referred to as a black list of users. The user access statistic model may be set in accordance with the actual situation of the network; furthermore, user access statistic model may be set in a variety of ways. The embodiments of the invention have no limitation on the specific form of the user access statistic model or the specific form of the user identification information.

In the traffic stream identification process, the user identification information needs to be extracted from the traffic stream; the user identification information should correspond with the user identification information in the white list/black list of users, for example, if the user identification information in the white list/black list of users is IP address, a source IP address needs to be extracted from the traffic stream. After the user identification information is extracted from the traffic stream, the extracted user identification information needs to be compared with the above user identification information, for example, the extracted user identification information is compared with the user identification information in the white list of users to determine whether they match. If the user identification information extracted from the traffic stream matches the user identification information in the white list of users, it indicates that the user identification information extracted from the traffic stream is the user identification information of a valid user and the traffic stream is transmitted from a valid user and therefore is a valid traffic stream; if the user identification information extracted from the traffic stream doesn't match the user identification information in the white list of users, it indicates that the user identification information extracted from the traffic stream is the user identification information of an invalid user and the traffic stream is transmitted from an invalid user and therefore is an invalid traffic stream.

The above-mentioned traffic stream identification process is described in an example of a white list of users; if a black list of users is generated with the user access statistic model, the traffic stream identification process is essentially identical to the above-mentioned process, and descriptions thereof are omitted here.

The traffic stream identification process described above may be applied in a variety of defense solutions, for example, it may be used in a DDoS attack defense technical solution. The DDoS attack defense method provided in the embodiment of the invention is described as follows.

In the DDoS attack defense process, the traffic stream identification process described above is utilized. After the traffic stream is identified as valid traffic stream or invalid traffic stream through the traffic stream identification process described above, subsequent normal processing operations are permitted for valid traffic stream, for example, normal transmission is permitted; subsequent normal processing operations are forbidden for invalid traffic stream, for example, normal transmission is forbidden, and the identified invalid traffic stream is discarded.

The DDoS attack defense process may be started once a DDoS attack occurs. The way of startup may be manual configuration startup or dynamic detection startup. In the case of dynamic detection startup, the traffic stream is detected and the detection result is determined, so as to determine whether any DDoS attack occurs; if a DDoS attack is determined, the user identification information may be extracted from the traffic stream, and the subsequent procedures, such as traffic stream identification may be carried out. There are a variety of ways to detect traffic stream and determine, in accordance with the detection result, whether any DDoS attack occurs. In the embodiments of the invention, the existing method may be used to detect and determine whether any DDoS attack occurs. The embodiments of the invention have no limitation on the specific method for detecting and determining whether any DDoS attack occurs.

After the traffic stream is identified as a valid traffic stream or an invalid traffic stream, subsequent processing may be carried out for the traffic stream by priority. Here, the priority may be generated dynamically with the user access statistic model, for example, in the process of detecting historical data of the user access to the target system, the user access statistic model may be utilized to predict dynamically the users who are possible to access the target system or the users who are impossible to access the target system in the DDoS attack process and the corresponding priority information. Then, a white list of users or a black list of users containing user identification information and the corresponding priority information may be generated dynamically in accordance with the users who are predicted to be possible to access the target system or the users who are impossible to access the target system and the priority information. After a white list/black list of users containing priority information is generated, if any DDoS attack is detected and the DDoS attack defense is started, the traffic stream may be processed in a variety of ways in accordance with the priority information, for example, subsequent normal processing operations may be permitted for valid traffic streams by priority in descending order; if the DDoS attack is severe, the valid traffic streams may be discarded by priority in bottom-to-top order. The embodiments of the invention have no limitation on the implementation of traffic stream processing by priority.

The embodiment of the invention may limit the bandwidth occupied by valid traffic streams, for example, it may limit the bandwidth occupied by each traffic stream. Furthermore, the limited bandwidths for valid traffic streams may be identical to each other or different from each other.

The traffic stream identifying method provided in an embodiment of the invention is described in detail as follows, in the case of a white list of users, by reference to the accompanying drawings.

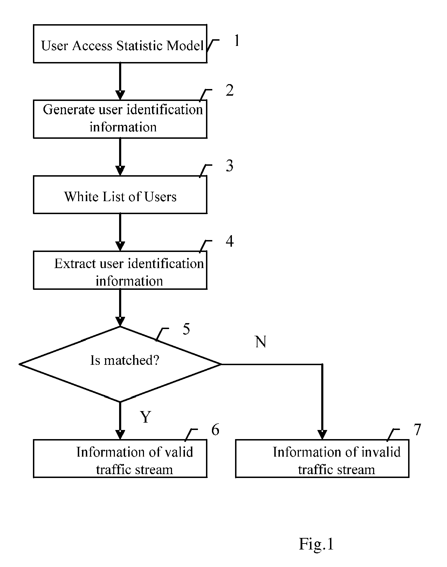

The traffic stream identifying method provided in an embodiment of the invention is shown in Figure 1.

As shown in Figure 1, in step 1, a user access statistic model is set. A simple user access statistic model may be: the user has accessed the target system as indicated in the historical access log, or the user has accessed the target system for predetermined times as indicated in the historical access log. Here, only two simple examples of the user access statistic model are provided; virtually, the user access statistic model may be in a variety of forms.

Step 2: The situation of the user access to the target system is detected and UID information is generate dynamically in accordance with the user access statistic model, for example, the probability that the user may access the target system in a DDoS attack process is determined in accordance with the user access statistic model, and the corresponding user identification information is obtained from the traffic stream of the user access to the target system if the user is determined as a valid user in accordance with the determined probability. Or, in step 2, the user identification information and the priority information corresponding to the user identification information may be generated dynamically with the user access statistic model; for example, the user's priority information may be determined in accordance with the predicted probability.

Step 3: The user identification information generated dynamically is stored into a white list of users.

If the priority information corresponding to the user identification information is generated dynamically in step 2, then the user identification information and priority information that is generated dynamically may be stored in the white list of users.

When the traffic stream needs to be identified, in step 4, the user identification information is extracted from the traffic stream, for example, a source IP address may be extracted from the traffic stream.

Step 5: The extracted user identification information is compared with the user identification information in the white list of users; if the user identification information extracted from the traffic stream matches the user identification information in the white list of users, step 6 is proceeded; otherwise step 7 is proceeded.

Step 6: The traffic stream is confirmed to be transmitted from a valid user, and the information that indicates the traffic stream is a valid traffic stream is output. If priority information is contained in the white list of users, in step 6, the information indicating the traffic stream is a valid traffic stream and the priority information corresponding to the valid traffic stream may be output.

Step 7: The traffic stream is confirmed to be transmitted from an invalid user, and the information that indicates the traffic stream is an invalid traffic stream is output.

The DDoS attack defense method provided in an embodiment of the invention is described as follows by reference to the accompanying drawings.

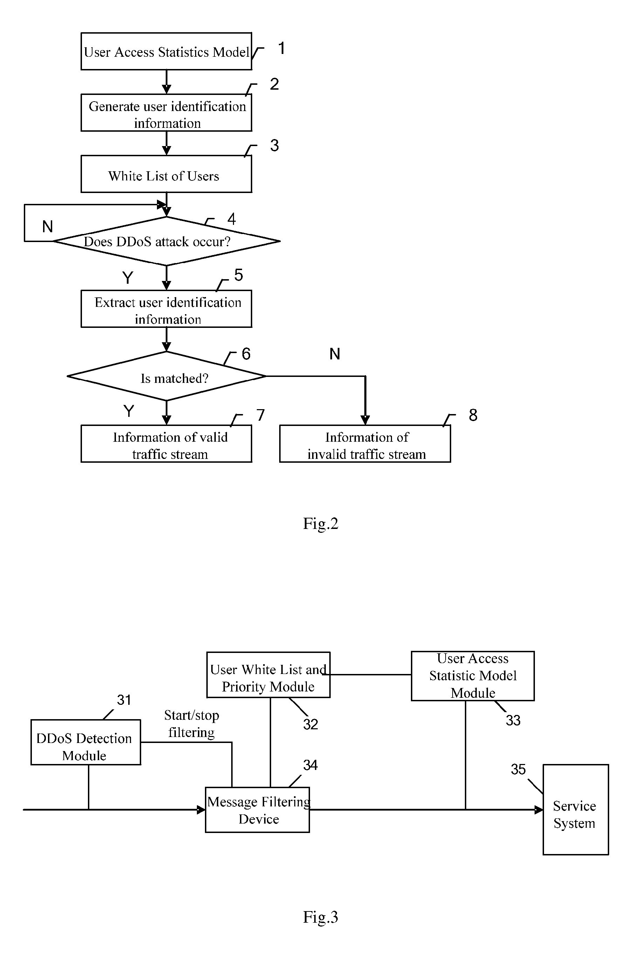

The DDoS attack defense method provided in an embodiment of the invention is shown in Figure 2.

As shown in Figure 2, in step 1, a user access statistic model is set. A simple user access statistic model may be: the user has accessed the target system as indicated in the historical access log, or the user has accessed the target system for predetermined times as indicated in the historical access log. Here, only two simple examples of the user access statistic model are provided; virtually, the user access statistic model may be in a variety of forms.

Step 2: The situation of the user access to the target system is detected in accordance with the traffic stream sent by the user, user identification information and priority information corresponding to the user identification information is generated dynamically in accordance with the user access statistic model. For example, the probability that the user may access the target system in a DDoS attack process is determined in accordance with the user access statistic model, and the corresponding user identification information is obtained from the traffic stream of the user access to the target system and the user's priority information is determined in accordance with the determined probability if the user is determined as a valid user against the determined probability.

Step 3: The user identification information and priority information generated dynamically is stored into a white list of users.

Step 4: Traffic flow is detect, and whether any DDoS attack occurs is determined in accordance with the traffic flow detection result; if any DDoS attack occurs, step 5 is proceeded; if no DDoS attack occurs, the traffic flow detection process is performed again.

Step 5: User identification information is extracted from the traffic stream, for example, a source IP address may be extracted from the traffic stream.

Step 6: The extracted user identification information is compared with the user identification information in the white list of users; if the user identification information extracted from the traffic stream matches the user identification information in the white list of users, step 7 is proceeded; otherwise step 8 is proceeded.

Step 7: The traffic stream is confirmed to be transmitted from a valid user, and subsequent normal processing operations is permitted for the traffic stream in accordance with the priority information corresponding to the traffic stream.

Step 8: The traffic stream is confirmed to be transmitted from an invalid user, and subsequent normal processing operations is forbidden for the traffic stream, and the traffic stream is discarded.

In above description for Figure 2, there is no precedence order between step 2/step 3 and step 4, that is, step 2 and step 3 may be executed independently, and have no precedence relationship with step 4; step 4 may be executed independently, and has no precedence relationship with step 2 and step 3. After DDoS attack is detected, the embodiment of the invention may detect the traffic flow persistently; when the DDoS attack is determined as terminated in accordance with the traffic flow detection result, steps 5 to 8 may be stopped, and step 2 and step 3 may be executed. The process is only an illustrative one; virtually, a variety of implementation processes are acceptable.

In the description of above embodiments, if the user identification information is new user identification information and the user identification information is only carried in the messages in the user login stage or before the user login stage, when DDoS attack is detected, whether the user is permitted to log in or a connection is permitted to establish with the user may be determined in accordance with the user identification information when the user tries to log in or initiate a connection. In that way, the DDoS attacks may be avoided to a certain degree.

In the description of above embodiments, a mapping relationship may be set as user identification information in the user identification information set, for example, the mapping relationship between user account number and new user identification information may be set. In that way, when the traffic stream is determined as a valid traffic stream in accordance with the new user identification information carried in the traffic stream, other traffic streams that don't carry the new user identification information in the mapping relationship of the user account may also be determined as valid traffic streams. The mapping relationship may be updated.

The DDoS attack defense method provided in an embodiment of the invention is described as follows in the case of new user identification information.

All protocol messages involved in interaction with the service system are supposed to contain an UID (user identification) field, which is in length of 128 bits.

User A and user B are supposed have logged into a service system successfully, the service system may be a service system that provides application services to users or a service system that provides access authentication service to users. When user A and user B access the service system for the first time, the UID field for user A is initialized to a random value 0x0123456789abcdef, and the UID field for user B is initialized as 0xfedcba9876543210.

The service system sets the UID for user A and user B dynamically in the user identification information set that is established with reference to the user access statistic model.

A DDoS attack is supposed to be detected in the service system, and then the service system may filter the traffic stream immediately in accordance with the UID in the user identification information set and the UID field in the traffic stream. Because the user identification information set in the service system is only set with the UID of user A and the UID of user B, the service system determines the traffic stream is an invalid traffic stream and thereby forbids performing subsequent normal processing operations for the invalid traffic stream upon determining the value of the UID field in the received traffic stream is not 0x0123456789abcdef or 0xfedcba9876543210; and the service system determines that the traffic stream is an valid traffic stream and thereby permits subsequent normal processing operations for the valid traffic stream upon determining the value of the UID field in the received traffic stream is 0x0123456789abcdef or 0xfedcba9876543210. In that way, the method may effectively prevent DDoS attacks.

The service system may limit the bandwidth of the traffic streams from user A and user B, so that the traffic streams from user A and user B may not exceed the preset bandwidth; in that way, even if the attacker tries DDOS attack by means of a forged UID value, severe adverse consequences resulted from DDOS attacks may be avoided to a certain degree. Here, the preset bandwidth values for user A and user B may be identical to each other or different from each other.

The traffic stream identifying device provided in an embodiment of the invention is described as follows.

The traffic stream identifying device provided in the embodiment of the invention includes a first module, a second module, and a third module.

The first module is mainly configured to detect a user access to the target system, generate user identification information dynamically in accordance with the detected user access to the target system and the preset user access statistic model, and then store the user identification information generated dynamically to the second module. In addition, the first module may generate priority information corresponding to the user identification information dynamically in accordance with the detected user access to the target system and the preset user access statistic model, and store the priority information generated dynamically to the second module. For example, when the first module predicts the probability of access to the target system from the user in DDoS attack process in accordance with the user access statistic model and determines the user is a valid user in accordance with the determined probability, the first module obtains the corresponding user identification information from the traffic stream of the user access to the target system and determines the priority information of the user in accordance with the determined probability, and then stores the user identification information and the priority information to the second module. Here, the user identification information may be existing user identification information that is born in the current traffic stream; or, the user identification information may be new user identification information that is added to implement the traffic stream identification and DDoS attack defense method in the embodiment of the invention, as described above.

The second module is mainly configured to receive the user identification information output from the first module, and stores the user identification information as a user identification information set. The user identification information set stored in the second module may be referred to as a white list of users. In addition, if the first module transmits the priority information corresponding to the user identification information to the second module, the white list of users stored in the second module may further include priority information corresponding to the user identification information.

The third module is mainly configured to extract user identification information from the traffic stream, compare the extracted user identification information with the user identification information stored in the second module to determine whether they match, and, if the user identification information in the traffic stream is determined as matching the user identification information stored in the second module, determine whether the traffic stream is valid and output the determination result information that indicates the traffic stream is a valid traffic stream; if the second module stores priority information corresponding to user identification information, the third module may output the priority information corresponding to the valid traffic stream; if the user identification information in the traffic stream is determined as not matching the user identification information stored in the second module, the third module may determine the traffic stream as an invalid traffic stream, and output the determination result information that indicates the traffic stream is an invalid traffic stream.

The DDoS attack defense system provided in an embodiment of the invention is described as follows.

The DDoS attack defense system provided in an embodiment of the invention includes: a first module, a second module, a third module, a fourth module, a fifth module, and a sixth module.

The first module is mainly configured to detect a user access to the target system, generate user identification information dynamically in accordance with the detected user access to the target system and the preset user access statistic model, or generate user identification information and priority information corresponding to the user identification information dynamically. Then, the first module stores the user identification information or the user identification information and priority information to the second module. For example, when the first module predicts the probability of access to the target system from the user in DDoS attack process in accordance with the user access statistic model and determines the user is a valid user in accordance with the determined probability, the first module predicts obtains the corresponding user identification information from the traffic stream of the user access to the target system and determines the priority information of the user in accordance with the determined probability, and then stores the user identification information and the priority information to the second module.

The first module may include a storage sub-module, a detection sub-module, and a first dynamic sub-module, or, it may include a storage sub-module, a detection sub-module, a first dynamic sub-module, and a second dynamic sub-module.

The storage sub-module is mainly configured to store the user access statistic model.

The detection sub-module is mainly configured to detect the situation of a user access to the target system, generate user identification information dynamically in accordance with the detected situation of the user access to the target system and the user access statistic model stored in the storage sub-module, predict the probability of access to the target system from the user in the DDoS attack process, and output the probability information.

The first dynamic sub-module is mainly configured to obtain the corresponding user identification information from the traffic stream of the user access to the target system when the user is determined as a valid user in accordance with the probability information output from the detection sub-module, and then store the user identification information to the second module. The first dynamic sub-module may also obtain the corresponding user identification information from the traffic stream of the user access to the target system when the user is determined as an invalid user, and then stores the user identification information to the second module.

The second dynamic sub-module is mainly configured to determine the priority information corresponding to the user in accordance with the probability information output from the detection sub-module, and transmit the priority information to the second module for storage. The second dynamic sub-module may determine the priority information corresponding to the user and output the priority information if the first dynamic sub-module determines the user is a valid user; or, the second dynamic sub-module may determine whether the priority information needs to be determined in accordance with the probability threshold stored therein directly, and, if the second dynamic sub-module determines, in accordance with the probability threshold, that the priority information needs to be determined, it determines the priority information corresponding to the user, and outputs the priority information.

The second module is mainly configured to receive the user identification information and priority information transmitted from the first module and store the information. For example, the second module receives the user identification information transmitted from the first dynamic sub-module and stores the user identification information; or, the second module receives the priority information transmitted from the second dynamic sub-module and stores the priority information. The user identification information and priority information stored in the second module may be referred to as a white list of users. The information stored in the second module may also be referred to as a black list of users.

The third module is mainly configured to extract user identification information from the traffic stream, compare the extracted user identification information with the user identification information stored in the second module to determine whether they match, and, if the user identification information in the traffic stream is determined as matching the user identification information stored in the second module, determine whether the traffic stream is valid and output the determination result information that indicates the traffic stream is a valid traffic stream; if the second module stores priority information corresponding to user identification information, the third module may output the priority information corresponding to the valid traffic stream; if the user identification information in the traffic stream is determined as not matching the user identification information stored in the second module, the third module may determine the traffic stream as an invalid traffic stream, and output the determination result information that indicates the traffic stream is an invalid traffic stream.

The third module is configured to start to extract the user identification information from the traffic stream and perform the subsequent comparison operation at the notification from the fifth module. Practically, if the system doesn't include a fifth module, the third module may start to extract the user identification information from the traffic stream and perform the subsequent comparison operation in other ways, such as manual configuration.

The fourth module is mainly configured to receive the determination result information that indicates whether the traffic stream output from the third module is valid; if the determination result information output from the third module indicates the traffic stream is a valid traffic stream, subsequent normal processing operations is permitted for the traffic stream, for example, the continued transmission of the traffic stream is permitted; if the determination result information output from the third module indicates the traffic stream is an invalid traffic stream, subsequent normal processing operations is forbidden for the traffic stream, for example, the continued transmission of the traffic stream is forbidden and the traffic stream is discarded. If the information output from the third module contains priority information, the fourth module permits subsequent normal processing operations for the traffic stream and perform the subsequent normal processing operations by priority corresponding to the traffic stream, for example, the fourth module permits transmitting the traffic streams in turn in accordance with the priority information of each valid traffic streams in top-to-bottom order.

The fifth module is mainly configured to detect traffic flow, and determine the traffic flow detection result; and, if a DDoS attack is determined to occur in accordance with the traffic flow detection result, the third module is notified to extract the user identification information from the traffic stream. The fifth module may continue to detect traffic flow and determine traffic flow detection result upon determining, in accordance with the traffic flow detection result, in accordance with the traffic flow detection result the DDoS attack has occurred; if the DDoS attack is determined to disappeared in accordance with the traffic flow detection result, the third module is notified to stop extracting user identification information from the traffic stream. The third module may stop the extraction operation and determine the subsequent processing operations upon reception of the notification for stop. In the system provided in the embodiment of the invention, the fifth module is an optional module.

The sixth module is mainly configured to limit the bandwidth occupied by valid traffic stream in accordance with the determination result information that indicates whether the traffic stream output from the third module is valid. When the sixth module limits the bandwidth occupied by valid traffic streams from different users, it may make different bandwidth limitation to valid traffic streams from different users, or make the same bandwidth limitation to valid traffic streams from different users. In the system provided in the embodiment of the invention, the sixth module is an optional module.

The system provided in the embodiment of the invention may be used for a single target system or a plurality of target systems. That is, the system provided in the embodiment of the invention may provide DDoS attack defense to one target system or a plurality of target systems at the same time. If the system provided in the embodiment of the invention provides DDoS attack defense to one target system, the system may be a front-end system for the target system, and may be arranged separately from the target system or in the target system.

The DDoS attack defense system provided in an embodiment of the invention is described as follows by reference to the accompanying drawings.

Figure 3 shows the DDoS attack defense system provided in an embodiment of the invention.

The system shown in Figure 3 includes: a DDoS detection module 31, a message filtering device 34, a user white list and priority module 32, and a user access statistic model module 33. The DDoS detection module 31 is virtually the fifth module described above. The message filtering device 34 includes the third module, fourth module, and sixth module described above. The user white list and priority module 32 is virtually the second module described above. The user access statistic model module 33 is virtually the first module described above.

The message filtering device 34 is mainly configured to accomplish filtering for the traffic streams that try to access the service system, that is, to filter message packets. The message filtering device 34 may perform filtering on the basis of the information stored in the user white list and priority module 32. For example, the message filtering device 34 may perform filtering for the message packets in accordance with a source IP address in message packet and an IP address in the user white list and priority module 32. Here, the service system is the target system described above. The message filtering device 34 may limit the bandwidth occupied by valid traffic streams.

The information stored in the user white list and priority module 32 is a white list of users, which contains priority information. The user identification information and priority information stored in the user white list and priority module 32 may exist in the form of table entries. The user white list and priority table entries log the user identification information of users who may access the service system and the priority information corresponding to the user identification information.

The user white list and priority table entries are maintained by the user access statistic model module 33. In the DDoS attack defense process, the message filtering device 34 may search in the user white list and priority table entries.

The user access statistic model module 33 is mainly configured to establish and maintain user white list and priority table entries in accordance with the situation of the user access to the service system under normal conditions. The table entries created and maintained by the user access statistic model module 33 are user identification information and priority information of users who are stated by the user access statistic model and are permitted to access the service system in case of any DDoS attack. If the user identification information corresponds to high priority, it indicates the users who access the service system frequently under normal conditions without any DDoS attack are permitted to access the service system without any restriction in case of DDoS attacks. If the user identification information corresponds to low priority, it indicates the users who access the service system occasionally under normal conditions without any DDoS attack may access the service system in a restricted manner in case of DDoS attacks.

The DDoS detection module 31 is mainly configured to detect the traffic flow in the service system, so as to determine whether the service system suffers any DDoS attack currently; the DDoS detection module 31 send a notification to the message filtering device 34, for example, send a filtering instruction to the message filtering device 34 upon detecting that the service system is under DDoS attack

The work flow of the defense system in normal state and in attacked state is described as follows, respectively.

In normal state, the message filtering device 34 performs transparent transmission, that is, no treatment is performed to the traffic streams. The user access statistic model module 33 detects the situation of the user access to the service system, and generates dynamically a user access white list that contains priority corresponding to each user in accordance with the user access statistic model. The user access white list that contains priority may be used in DDoS attack process. The DDoS detection module 31 detects the traffic flow in the service system persistently, so as to determine whether any DDoS attack occurs.

In case of any DDoS attack, the message filtering device starts to extract user identification information from the traffic stream, performs filtering for the traffic stream that tries to access the service system with the filtering rule stated in the user white list and priority table entries, so as to ensure the users listed in the user white list may access the service system by priority. The message filtering device may perform bandwidth limitation operation to the traffic streams in accordance with the preset bandwidth. The user access statistic model module 33 stops working. The DDoS detection module 31 detects the traffic flow persistently, so as to determine whether the DDoS attack has disappeared.

The switching between normal state and DDoS attacked state is triggered by the DDoS detection module 31. That is, once the DDoS detection module 31 detects any DDOS attack in the service system, it may trigger the message filtering device 34 to switch the DDoS attack defense system into "DDoS attacked" state; when the DDoS detection module 31 detects the DDoS attack in the service system has disappeared, it may trigger the message filtering device 34 to switch the DDoS attack defense system to normal state.

The user access statistic model module 33 may be integrated in the service system. The DDOS detection module 31 may be arranged together with the message filtering device 34 in a same device; or, the DDOS detection module 31, message filtering device 34, and user white list and priority module 32 may be arranged together in a same device.

The device provided in an embodiment of the invention is described as follows.

The device provided in an embodiment of the invention includes a first module and a second module. The first module may include a storage sub-module, a detection sub-module, and a first dynamic sub-module, or, the first module may include a storage sub-module, a detection sub-module, a first dynamic sub-module, and a second dynamic sub-module. The operations of above modules and sub-modules are identical to those described above, and descriptions thereof are omitted here.

The device provided in the embodiments of the invention is a device that may create a white list of users and/or a black list of users as required by the servers in the service system.

In the embodiments of the invention, a user access statistic model is utilized to generate user identification information dynamically; thereby, the user identification information is easy to maintain, and may identify valid users accurately as far as possible; as a result, when the user identification information that is generated dynamically is used to identify valid traffic streams and invalid traffic streams, the accuracy in identification of valid traffic streams may be improved; because in the embodiments of the invention, valid traffic streams may be identified accurately, it may effectively defense Distributed Deny of Service attacks caused by invalid traffic streams, that is, the embodiments of the invention employ a Distributed Deny of Service attack that incorporates user access model and message filtering, and thereby enhance defense capability of the Distributed Deny of Service attack defense system while avoid loss of valid traffic streams to the attacked party. By limiting the bandwidth occupied by valid traffic streams in the embodiments of the invention, severe adverse consequences caused by Distributed Deny of Service attacks to a certain degree may be avoided, and therefore defense capability of the Distributed Deny of Service attack defense system may be enhanced.

While the present invention has been illustrated and described with reference to some embodiments, those skilled in the art should recognize that various variations and modifications may be made without departing from the spirit and the various variations and modifications are included in the accompanying claims.

## Claims

1. A traffic stream identifying method, comprising:
detecting a user access to a target system;
generating a user identification information set dynamically in accordance with the detected user access to the target system and a preset user access statistic model;
extracting the user identification information from a traffic stream when the traffic stream needs to be identified;
comparing the extracted user identification information with the user identification information in the user identification information set to determine whether they match; and
determining whether the traffic stream is valid in accordance with a result of comparison.

2. A Deny of Service attack defense method, comprising:
detecting a user access to a target system;
generating a user identification information set dynamically in accordance with the detected user access to the target system and a preset user access statistic model;
extracting user identification information from a traffic stream when the traffic stream needs to be identified;
comparing the extracted user identification information with the user identification information in the user identification information set to determine whether they match;
determining whether the traffic stream is valid in accordance with the result of comparison; and
permitting subsequent normal processing operations for the determined valid traffic stream; or, forbidding any subsequent normal processing operation for the determined invalid traffic stream.

3. The method according to claim 2, wherein the act of extracting user identification information from the traffic stream when the traffic stream needs to be identified comprises: extracting user identification information from the traffic stream upon any Deny of Service attack is detected.

4. The method according to claim 3, wherein whether any Deny of Service attack occurs or not is determined by detecting the traffic flow.

5. The method according to any one of claims 2 to 4, wherein the user identification information set that is generated dynamically in accordance with the detected user access to the target system and the preset user access statistic model further comprises priority information corresponding to the user identification information;
the act of permitting subsequent normal processing operations for the determined valid traffic stream comprises: permitting subsequent normal processing operations for the determined valid traffic stream in accordance with the priority information corresponding to the user identification information of the valid traffic stream.

6. The method according to any one of claims 2 to 4, wherein the user identification information in the user identification information set comprises: existing user identification information in the traffic stream and/or new user identification information in the traffic stream; and
the user identification information extracted from the traffic stream corresponds to the user identification information in the user identification information set.

7. The method according to any one of claims 2 to 4, wherein the user identification information in the user identification information set comprises new user identification information in the traffic stream, and the new user identification information is generated at the user side or the network side.

8. The method according to any one of claims 2 to 4, wherein the user identification information set comprises a user identification information set of valid users and/or a user identification information set of invalid users.

9. The method according to any one of claims 2 to 4, further comprising: limiting the bandwidth occupied by the valid traffic stream.

10. A traffic stream identifying device, comprising:
a first module, configured to detect a user access to the target system, generate user identification information dynamically in accordance with the detected user access to the target system and a preset user access statistic model, and output the user identification information;
a second module, configured to receive the user identification information output from the first module, and store the user identification information into a user identification information set; and
a third module, configured to extract user identification information from a traffic stream, compare the extracted user identification information with the user identification information in the user identification information set to determine whether they match, and determine, in accordance with the result of comparison, whether the traffic stream is valid, and output a determination result.

11. A Deny of Service attack defense system, comprising:
a first module, configured to detect a user access to the target system, generate user identification information dynamically in accordance with the detected user access to the target system and a preset user access statistic model, and output the user identification information;
a second module, configured to receive the user identification information output from the first module, and store the user identification information into a user identification information set;
a third module, configured to extract user identification information from the traffic stream, compare the extracted user identification information with the user identification information in the user identification information set to determine whether they match, and determine, in accordance with the result of comparison, whether the traffic stream is valid , and output a determination result; and
a fourth module, configured to receive the determination result that indicates whether the traffic stream output from the third module is valid, and permit subsequent normal processing operations for the determined valid traffic stream, or forbid any subsequent normal processing operation for the determined invalid traffic stream.

12. The system according to claim 11, further comprising:
a fifth module, configured to detect traffic flow and determine whether any Deny of Service attack occurs, and instruct the third module to extract user identification information from the traffic stream upon determining that any Deny of Service attack occurs.

13. The system according to claim 11, wherein the first module comprises:
a storage sub-module, configured to store the user access statistic model;
a detection sub-module, configured to detect the user access to the target system, and determine the probability of the user access to the target system in accordance with the information on the detected user access to the target system and the user access statistic model stored in the storage sub-module; and
a first dynamic sub-module, configured to obtain the user identification information and output the user identification information to the second module upon determining the user identification information needs to be obtained from the traffic stream of the user access to the target system in accordance with the probability determined by the detection sub-module.

14. The system according to claim 13, wherein the first module further comprises:
a second dynamic sub-module, configured to generate priority information corresponding to the user identification information in accordance with the probability determined by the detection sub-module, and output the priority information to the second module for storage;
the fourth module determines the priority corresponding to the user identification information for the valid traffic stream in accordance with the priority information stored in the second module, and permits to perform subsequent normal processing operations for the determined valid traffic stream in accordance with the determined priority, upon the subsequent normal processing operations is permitted by the fourth module to perform for the determined valid traffic stream.

15. The system according to any one of claims 11 to 14, wherein:
the Deny of Service attack defense system is a front-end system for the target system, and the Deny of Service attack defense system is arranged separately from the target system or in the target system.

16. The system according to any one of claims 11 to 14, wherein the Deny of Service attack defense system is mapped to one target system or a plurality of target systems.

17. The system according to any one of claims 11 to 14, further comprising:
a sixth module, configured to limit a bandwidth occupied by valid traffic stream in accordance with the determination result that indicates whether the traffic stream output from the third module is valid.

18. A user information generating device, comprising:
a first module, configured to detect a user access to a target system, generate user identification information dynamically in accordance with the detected user access to the target system and a preset user access statistic model, and output the user identification information;
a second module, configured to receive the user identification information output from the first module, and stores the user identification information into a user identification information set.

19. The device according to claim 18, wherein the first module comprises:
a storage sub-module, configured to store the user access statistic model;
a detection sub-module, configured to detect the user access to the target system, and determine the probability of the user access to the target system in accordance with the information on the detected user access to the target system and the user access statistic model stored in the storage sub-module;
a first dynamic sub-module, configured to obtain the user identification information and output the user identification information to the second module, upon determining the user identification information needs to be obtained from the traffic stream of the user access to the target system in accordance with the probability determined by the detection sub-module.

20. The device according to claims 18 or 19, wherein the user identification information set comprises a user identification information set of valid users and/or a user identification information set of invalid users.
